# EUROPÄISCHE PATENTSCHRIFT

(11) **EP 2 726 270 B1**
(45) Veröffentlichungstag und Bekanntmachung des Hinweises auf die Patenterteilung: **28.03.2018**
(21) Anmeldenummer: 12730903.7
(22) Anmeldetag: 22.06.2012
(51) Int. Cl.: B29C 63/02, B29C 65/20, B32B 5/18, B32B 5/32, B32B 27/12, B32B 27/30, B32B 37/06, B32B 37/10, E04B 1/80, E04C 2/296, B29C 65/26, B29K 25/00, B29K 105/04, E04B 1/76, B32B 37/04

(54) **VERFAHREN ZUR HERSTELLUNG VON DÄMMPLATTEN**
METHOD FOR MANUFACTURING INSULATION PANELS
PROCÉDÉ DE FABRICATION DE PANNEAUX ISOLANTS

(30) Priorität: 29.06.2011 CH 10892011
(43) Veröffentlichungstag der Anmeldung: 07.05.2014
(73) Patentinhaber: Sager AG, 5724 Dürrenäsch (CH)
(72) Erfinder: FREI, Johannes Martin, CH-5724 Dürrenäsch (CH)
(74) Vertreter: Schneider Feldmann AG Patent- und Markenanwälte
(86) Internationale Anmeldenummer: PCT/EP2012/062135
(87) Internationale Veröffentlichungsnummer: WO 2013/000837

(56) Entgegenhaltungen:
- WO-A1-2010/144951
- DE-A1- 1 932 582
- DE-A1- 4 421 016

## Beschreibung

Die Erfindung betrifft ein Verfahren zur Herstellung von Dämmplatten, insbesondere von Dämmplatten zur Wärmeisolation von Aussenfassaden, Sockelbereichen, Wänden oder anderen Teilen von Gebäuden aus expandiertem Polystyrol (EPS) und extrudiertem Polystyrol (XPS), umfassend eine Reflektorschicht und mindestens eine Deckschicht.

Dämmplatten aus expandiertem Polystyrol zur Isolation von Gebäudeteilen u. a. sind hinlänglich bekannt. Sie werden z. B. durch Expansion von Styrolpolymerisatpartikeln in Dampfkammern und nachfolgenden Zuschnitt hergestellt.

Hauptsächlich werden Dämmplatten aus pigmentfreien Styrolpolymerisatpartikeln hergestellt.

Zwecks Verbesserung der Dämmwirkung werden neben dickeren Platten zunehmend auch noch solche hergestellt, die ergänzend Partikel mit dunklen Pigmenten enthalten, z.

B. aus Russ, Farbstoffen, Grafit u. a. Der Anteil der pigmentierten Styrolpolymerisatpartikel kann 10-90 Gew.-% betragen (DE-U-20315226 und EP-A-2010601, siehe auch EP-A-0981574, bei der eine Verteilung 50:50 als besonders vorteilhaft angesehen wird).

Gemäss EP-A-1815077 können die Dämmplatten dabei auch aus zwei Teilen bestehen, einem Teil mit überwiegender Dämmwirkung, der aus einem grauen expandierten Polystyrol besteht und athermane Stoffe für eine zusätzliche Funktion enthält und einem zweiten Teil aus Hartschaum mit wenigstens einer weiteren Schutzeigenschaft. Die athermanen Stoffe können wiederum Russ, Grafit u. a. sein und die als Infrarotabsorber bzw. -reflektoren fungieren. Der andere Plattenteil erfüllt z. B. eine Schallschutzfunktion. Beide Teile sind thermisch miteinander verbunden, bezeichnet als thermisches verschweissen, bei dem erhitzte Metallnadeln die aufeinanderliegenden Teile durchstechen. Dadurch werden im Umfeld der Nadeln verbindende Kontaktflächen gebildet. Die Anzahl der Kontaktflächen entspricht der Anzahl der Nadeln und es entsteht keine durchgehende Verbindungsfläche der Teile. Es ist weiterhin bekannt, eine dunkle Reflektorplatte zwischen zwei weissen Deckplatten anzuordnen.

Bei einer ähnlichen Dämmplatte gemäss DE-U-8226114, die insbesondere für Flachdächer verwendet wird, besteht die Platte aus einer dämmenden Grundschicht aus Hartschaum und einer nach aussen gerichteten Schutzschicht aus einem Fasermaterial. In der EP-A-1213118 ist ein Verfahren zur Herstellung einer Schaumstoffplatte offenbart, die aus zwei Ausgangsplatten gebildet wird. Die Ausgangsplatten, die an den Berührungsflächen extrusionshautlos sein sollen, werden mittels eines diffusionsoffenen Klebers und oder durch mechanische Verbindungselemente teilflächig miteinander verbunden. Die mechanischen Verbindungselemente bestehen dabei bevorzugt aus dem Werkstoff der Ausgangsplatten.

Die DE 4421016 A1 beschreibt eine zweiteilige, geschäumte Dämmplatte aus XPS oder Polyethylen, deren Berührungsflächen verschweisst sind. Die Verschweissung erfolgt mittels Druckrollen, wobei die notwendige Anschmelzung der Berührungsflächen durch ein Heizschwert erzeugt wird.

Bekannt ist aber auch die Verwendung von Polyurethan und die Herstellung von Verbunddämmplatten aus Schaumpolystyrol und Polyurethan gemäss DEOS 1932582, wobei die Platten miteinander verklebt sind, z. B. durch Schmelzverklebung.

Eine Sandwichdämmplatte gemäss WO 2010144951 A1 weist eine innere Dämmplatte aus XPS und/oder EPS auf, die durch eine Metallplatte zweigeteilt sein kann. Die Deckplatte hingegen besteht aus Magnesiumoxid.

Die Aufgabe der Erfindung besteht nun darin, ein Verfahren zur Herstellung von Dämmplatten, insbesondere zur Wärmeisolation von Aussenfassaden, Sockelbereichen, unter Terrain, im Flachdach-Bereich sowie Wänden oder anderen Teilen von Gebäuden vollständig aus expandiertem Polystyrol (EPS) und extrudiertem Polystyrol (XPS), umfassend mindestens eine Reflektorschicht und eine Deckschicht zu schaffen, die unterschiedliche Schutzfunktionen erfüllen, wobei eine gute Haftung zwischen den Schichten resp. Platten und eine gute Masshaltigkeit bei geringem Aufwand erreicht werden sollen.

Hergestellt werden soll eine Dämmplatte, die eine minimale Wasseraufnahme aufweist, bei gleichzeitig verbessertem Dämmwert infolge athermaner Bestandteile.

Die Aufgabe ist mit den Merkmalen des Patentanspruchs 1 gelöst. Eine Deckplatte wird etwa parallel zu einer Reflektorplatte zugeführt und nachfolgend werden die sich gegenüberliegenden Flächen gleichzeitig soweit erwärmt, dass durch Andrücken dieser Flächen eine feste Verbindung zwischen beiden Platten erreicht wird. Die Erwärmung wird mittels Spiegelschweissen ausgeführt und dabei wird auf den erwärmten Flächen ein schmelzflüssiger Film ausgebildet. Die Verbindung erfolgt kleberfrei und somit vollflächig. Die Erwärmungstemperatur beträgt vorzugsweise ca. 195°C. Erfindungsgemäss, insbesondere bei Anwendungen im Sockelbereich und unter Terrain (oder dergleichen) und im Flachdachbereich, werden zur Rundumsicherung der Reflektorplatte zusätzlich noch deren Schmalseiten in erforderlicher Weise versiegelt resp. beschichtet. Dies geschieht ebenfalls durch eine Beschichtung mittels Schweissverfahren und/oder eine Beschichtung mittels eines Anstrichs, eines Klebers oder mittels Deckplatten oder einer thermischen Versiegelung.

Reflektorplatte und Deckplatte(n) weisen als Ausgangsplatten ein Übermass auf, das infolge des Anschmelzens und Verbindens eliminiert wird. Die so gefertigte Dämmplatte weist dann das geforderte Nennmass auf.

Bevorzugte Ausführungsformen sind in den abhängigen Ansprüchen offenbart.

Die Dämmplatte besteht somit aus mindestens zwei Platten, d. h. einer dunklen und dämmenden Reflektorplatte und mindestens einer, bevorzugt zwei Deckplatte(n) mit einer zusätzlichen Schutzfunktion, die kleberfrei und vollflächig miteinander verbunden sind.

Bei beidseitig erforderlichen Deckplatten wird analog ein entsprechender, zweiter Verbindungsvorgang ausgeführt.

Die dämmende Reflektorplatte enthält in bekannter Weise dunkle Pigmente enthaltende Partikel, insbesondere Grafitpartikel.

Der Anteil der pigmentierten Styrolpolymerisatpartikel kann <10% Gew.-% Anteil sein.

Die extrusionshautlose Deckplatte besteht vollständig aus pigmentfreien Partikeln und ist nach aussen und nach innen gewandt, wobei die Deckplatte deutlich dünner als die dämmende Reflektorplatte ist, in einem Verhältnis kleiner 10:90 (bei zwei Deckplatten beträgt deren Dicke maximal 10% der Dicke der resultierenden Dämmplatte).

Die Dämmplatte ist eine Verbundplatte aus weissem oder pigmentiertem (mit thermanen Anteilen) EPS und extrudiertem Polystyrol (XPS).

Der Querschnitt kann quaderförmig wie auch trapezförmig oder dergleichen sein. Nicht erfindungsgemäss wurde eine Vorrichtung zur Herstellung von Dämmplatten aus expandiertem Polystyrol (EPS) und extrudiertem Polystyrol XPS entwickelt, ein einfaches Verbinden der Ausgangsplatten ermöglicht. Die Vorrichtung weist Elemente zur etwa parallelen Zuführung der weissen und pigmentierten Ausgangsplatten, respektive von extrusionshautlosen XPS-Platten und pigmentierten Ausgangsplatten sowie eine nachgeordnete Heiz- und Andrückelemente auf, so dass im Ergebnis die erfindungsgemässe Dämmplatte entsteht sowie der Beschichtung der Schmalseiten.

In bevorzugter Ausbildung der Vorrichtung ist das Heizelement ein Heizschwert und das Andrückelement weist mindestens eine Andruckwalze auf.

Bevorzugt mittels eines endlos umlaufenden Bandes, das auch die mindestens eine Andruckrolle umschliesst, erfolgt die Zuführung der weissen Deckplatte.

Bei Bedarf ist dem Andrückelement eine übliche Schneideinrichtung zum Einschneiden der Deckplatte nachgeordnet.

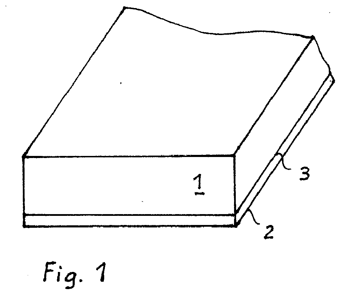

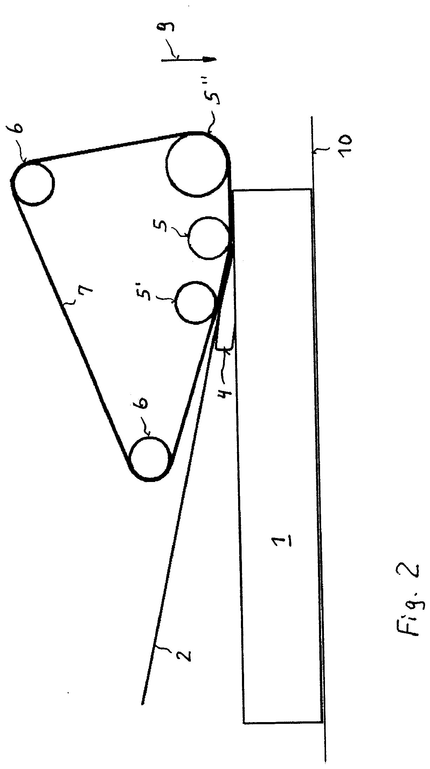

Mit der Erfindung wird mit geringem Aufwand das Problem gelöst, dass die Wasseraufnahme verhindert werden kann bei gleichzeitigem einhalten des besseren Dämmwertes der EPS-Dämmplatte mit athermanen Bestandteilen. Ebenfalls werden die dampfdiffusionstechnischen Anforderungen mit einer beidseitigen Beschichtung erfüllt. Zudem wirkt die Deckschicht als Barriere für die Dämmschicht, so dass eine höhere Formstabilität erreicht wird, und nur in geringerem Masse eine dämmende Wirkung. Technische Elemente zur Ausführung der Erfindung werden nachfolgend anhand einer Zeichnung näher beschrieben. In der Zeichnung zeigen die Fig. 1: eine Dämmplatte, die nicht Teil der Erfindung ist Fig. 2: eine Vorrichtung zur Herstellung von Dämmplatten, die nicht Teil der Erfindung ist. EPS-Platten werden in bekannter Weise durch Expansion von Styrolpolymerisatpartikeln in Dampfkammern hergestellt. Gefertigt werden höher dämmende Reflektorplatten 1, die pigmentierte Styrolpolymerisatpartikel aufweisen. Die Deckplatten 2 werden aus extrudiertem Polystyrol mittels Treibgasen hergestellt.

Eine Reflektorplatte 1 wird parallel einem Maschinentisch 10 auf einem Förderband der Vorrichtung zur Herstellung von Dämmplatten horizontal zugeführt. Darüber werden mittels nicht dargestellter Fördermittel oder durch manuelle Zuführung über eine geneigte Rutsche die wesentlich dünneren Deckplatten 2 zugeführt. Diese dünneren Deckplatten 2 sind biegsam, so dass sie sich von der Rutsche auf die eben zugeführte Reflektorplatte 1 um die Krümmung einer Andrückwalze 5 verformen lässt. Der Andrückwalze 5 unmittelbar vorgelagert ist im Bereich der Zusammenführung ein im Querschnitt keilförmiges Heizschwert 4. Das Heizschwert 4 ist ölbeheizt und soll eine gleichmässige Erwärmung der kontaktierten Oberflächen der Platten 1, 2 auf ca. 195°C ermöglichen. Das Heizschwert 4 ist z. B. teflonbeschichtet und kann aus einem Aluminiumwerkstoff oder Edelstahl bestehen. Für die beidseitige Beschichtung wird die Platte gedreht oder der Prozess läuft mit dem gleichen Aufbau unten und oben ab.

Mittels mindestens einer weiteren Andrückwalze 5' wird die Deckplatte 2 gegen das Heizschwert 4 gedrückt.

Zur Abstützung der Deckplatte 2 ist eine Stützrolle 8 vorgesehen. Die Deckplatte 2 weist eine Ausgangsdicke von ca. 6,5 mm auf, die Reflektorplatte 1 eine Ausgangsdicke von ca. 158 mm, d. h. zwei Millimeter (respektive 4mm für die beidseitige Anwendung) unterhalb des Nennmasses der herzustellenden Dämmplatte.

Auf das Heizschwert 4 folgen bei der hier dargestellten Anlage zwei Andrückwalzen 5, 5" die auf gleicher Höhe nacheinander angeordnet sind. Die rechts liegende Andrückwalze 5" ist zugleich Antriebswalze. Auf die Andrückwalzen 5, 5" folgt, bei nur einseitiger Anordnung einer Deckplatte 2, beabstandet eine übliche Schneideinrichtung 9 zur Einbringung von Entlastungsschnitten in die Deckplatte 2.

Die Stützrolle 8 und die Andrückwalzen 5, 5', 5" sowie eine Umlenkrolle 6 sind von einem endlos umlaufenden und temperaturbeständigen Führungsband 7 mit rauer Oberfläche umfasst, das der Zuführung der Deckplatte 2 dient. Die Zuführung der Reflektorplatte 1 zum Heizschwert 4 kann ebenfalls mittels eines, nicht dargestellten Transportbandes, einer Vorschubeinheit o. a. erfolgen.

Mittels Walzendruck der Andrückwalzen und Einstellung der Arbeitshöhe wird das erforderliche Dickennennmass der Dämmplatte erreicht.

Die kontaktierten Oberflächen der Platten 1, 2 schmelzen infolge der Erwärmung an und es wird ein schmelzflüssiger Film ausgebildet ("benetzen" durch Erwärmung bis oberhalb der Erweichungstemperatur), der zugleich eine Verringerung der Plattenstärke bewirkt. Unter Bildung der Kontaktfläche 3 wird die Deckplatte 2 durch die Andrückwalzen 5 gegen die Reflektorplatte 1 gedrückt, wobei infolge des anschmelzens und nachfolgenden andrückens der Platten 1, 2 die Dämmplatte mit einer Dicke von ca. 160 mm und einem Lambdawert von < 0,03 entsteht.

Bei beidseitig erforderlichen Deckplatten 2 wird analog ein entsprechender, zweiter Verbindungsvorgang ausgeführt.

Bei lediglich einseitiger Anordnung einer Deckplatte 2 kann diese mit einfachen, oberflächennahen Einritzungen zur Spannungsreduktion bei resp. infolge der Verbindung mit der Reflektorplatte 1 versehen werden. Z. B. kann in Längsrichtung ein Einschnitt und in Querrichtung können drei Einschnitte ausgeführt werden, bevor die Deckplatte 2 über die Rutsche zugeführt wird. Die Tiefe der Einritzungen bzw. Einschnitte beträgt max. ¼ der Dicke der Deckplatte 2.

### Bezugszeichen

- 1: Reflektorplatte
- 2: Deckplatte
- 3: Kontaktfläche
- 4: Heizschwert
- 5: Andrückwalze
- 5': Andrückwalze
- 5": Andrückwalze
- 6: Umlenkrolle
- 7: Führungsband
- 8: Stützrolle
- 9: Schneideinrichtung
- 10: Maschinentisch

## Patentansprüche

1. Verfahren zur Herstellung von Dämmplatten aus expandiertem Polystyrol (EPS) und extrudiertem Polystyrol (XPS), die eine dämmende Schicht resp. Reflektorplatte (1) und mindestens eine Deckschicht resp. Deckplatte (2) mit einer zusätzlichen Schutzfunktion umfassen, wobei in einem ersten Schritt die Platten (1, 2), die zusammen eine grössere Dicke als das Nennmass der herzustellenden Dämmplatte aufweisen, zueinander zugeführt werden und die sich gegenüberliegenden Flächen der Platten (1, 2) gleichzeitig erwärmt werden und nachfolgend diese Flächen unter Ausbildung einer Kontaktfläche (3) gegeneinander gedrückt werden und die Flächen somit vollflächig verbunden werden und eine Dämmplatte mit Nennmass ergeben, wobei die Schmalseiten der Reflektorplatte (1) versiegelt und/oder beschichtet werden.

2. Verfahren nach Anspruch 1, **dadurch gekennzeichnet, dass** die Verbindung der Platten (1) und (2) unter Druck erfolgt, wobei die Flächen bis oberhalb der Erweichungstemperatur des EPS erwärmt werden.

3. Verfahren nach Anspruch 1, **dadurch gekennzeichnet, dass** die Dicke der Deckplatte (2) weniger als 10% der Dicke der Reflektorplatte (1) beträgt.

4. Verfahren nach mindestens einem der Ansprüche 1 bis 3, **dadurch gekennzeichnet, dass** eine Reflektorplatte (1) beliebiger Stärke auf beiden Längsseiten unter Ausbildung einer Kontaktfläche (3) mit einer Deckplatte (1) verbunden wird.

5. Dämmplatte, hergestellt nach einem Verfahren der Ansprüche 1 bis 4, wobei sie eine Reflektorplatte (1) und mindestens eine Deckplatte (2) mit einer zusätzlichen Schutzfunktion umfasst, die kleberfrei und vollflächig auf Nennmass der Plattenstärke miteinander verbunden sind, wobei die Reflektorplatte (1) auf beiden Längsseiten unter Ausbildung einer Kontaktfläche (3) mit einer Deckplatte (2) verbunden ist und die Schmalseiten der Reflektorplatte (1) versiegelt oder beschichtet sind.

6. Dämmplatte nach Anspruch 5, **dadurch gekennzeichnet, dass** Deckplatten oder Deckschichten an den Schmalseiten mit der Reflektorplatte (1) verklebt sind.

## Claims

1. A method for producing insulation sheets of expanded polystyrene (EPS) and extruded polystyrene (XPS), comprising an insulating layer resp. a reflector sheet (1) and at least one cover layer resp. cover sheet (2) with an additional protective function, wherein, in a first step, the sheets (1, 2), which together have a greater thickness than the nominal dimension of the insulation sheet to be produced, are combined with one another, and the opposing surfaces of the sheets (1, 2) are heated at the same time and then the surfaces are pressed against one another, forming a contact surface (3), and the surfaces are thus joined together over the full area, resulting in an insulation sheet with the nominal dimensions, wherein the narrow slides of the reflection sheet (1) are sealed and/or coated.

2. The method according to claim 1, **characterized in that** the connection of the sheets (1) and (2) takes place under pressure, wherein the surfaces are heated to a temperature above the softening temperature of the EPS.

3. The method according to claim 1, **characterized in that** the thickness of the cover sheet (2) amounts to less than 10% of the thickness of the reflector sheet (1).

4. The method according to at least one of claims 1 to 3, **characterized in that** a reflector sheet (1) of any thickness is joined to a cover sheet (1) along both longitudinal sides, forming a contact surface (3).

5. An insulation sheet produced by a method according to claims 1 to 4, wherein it comprises a reflector sheet (1) and at least one cover sheet (2) with an additional protective function, the sheets being joined to one another over the full area to the nominal dimensions of the sheet thickness and without adhesive, wherein the reflector sheet (1) is joined to a cover sheet (2) on both longitudinal sides, forming a contact surface (3), and the narrow sides of the reflector sheet (1) are sealed or coated.

6. The insulation sheet according to claim 5, **characterized in that** cover sheets or cover layers are glued onto the narrow sides with the reflector sheet (1).

## Revendications

1. Procédé destiné à la fabrication de panneaux isolants en polystyrène expansé (EPS) et en polystyrène extrudé (XPS) qui comprennent une couche isolante, respectivement une plaque réflectrice (1) et au moins une couche de couverture, respectivement une plaque de recouvrement (2) dotée d'une fonction protectrice supplémentaire, sachant que dans une première étape, on amène l'une vers l'autre les plaques (1, 2), qui ensemble présentent une épaisseur supérieure à la dimension nominale du panneau isolant qui doit être fabriqué et on chauffe simultanément les surfaces qui se font face des plaques (1, 2) et par la suite, on presse l'une contre l'autre lesdites surfaces en formant une surface de contact (3) et on assemble ainsi les surfaces à pleine surface pour obtenir un panneau isolant à dimension nominale, les côtés étroits de la plaque réflectrice (1) étant scellés et/ou revêtus.

2. Procédé selon la revendication 1, **caractérisé en ce que** l'assemblage des plaques (1) et (2) s'effectue sous pression, les surfaces étant chauffées jusqu'à au-delà de la température de ramollissement de l'EPS.

3. Procédé selon la revendication 1, **caractérisé en ce que** l'épaisseur de la plaque de recouvrement (2) s'élève à moins de 10% de l'épaisseur de la plaque réflectrice (1).

4. Procédé selon au moins l'une quelconque des revendications 1 à 3, **caractérisé en ce qu'**on assemble une plaque réflectrice (1) d'une épaisseur quelconque sur les deux côtés longitudinaux, en formant une surface de contact (3) avec une plaque de recouvrement (1).

5. Panneau isolant, fabriqué selon un procédé des revendications 1 à 4, sachant qu'elle comprend une plaque réflectrice (1) et au moins une plaque de recouvrement (2) dotée d'une fonction protectrice supplémentaire, qui sont assemblées l'une avec l'autre sans agent adhésif et à pleine surface à la dimension nominale de l'épaisseur du panneau, la plaque réflectrice (1) étant assemblée sur les deux côtés longitudinaux en formant une surface de contact (3) avec une plaque de recouvrement (2) et les côtés étroits de la plaque réflectrice (1) étant scellés ou revêtus.

6. Panneau isolant selon la revendication 5, **caractérisé en ce que** des plaques de recouvrement ou des couches de couverture sont collées sur les côtés étroits avec la plaque réflectrice (1).
